# EUROPÄISCHE PATENTANMELDUNG

(11) **EP 0 997 682 A2**
(43) Veröffentlichungstag der Anmeldung: **03.05.2000**
(21) Anmeldenummer: 99120475.1
(22) Anmeldetag: 14.10.1999
(51) Int. Cl.: F17C 9/02, F17C 13/00

(54) **Druckaufbauverdampfer**

(30) Priorität: 28.10.1998 DE 19849766
(71) Anmelder: Linde Aktiengesellschaft, 65189 Wiesbaden (DE)
(72) Erfinder: Rüdiger, Horst, Dipl.-Ing., 86163 Augsburg (DE); Posselt, Heinz, Dr. Dipl.-Phys, 81477 München (DE)
(74) Vertreter: Kasseckert, Rainer

(57) **Zusammenfassung**

Vorrichtung zum Druckaufbau in einem Speicherbehälter für kryogene Flüssigkeiten mit einem Gehäuse, welches zumindest eine Eintrittsöffnung für Flüssigkeit und im Inneren eine Heizvorrichtung zur Verdampfung von Flüssigkeit sowie eine im oberen Drittel des Gehäuses angeordnete Dampfleitung zum Abführen der bei der Verdampfung entstehenden Dampfblasen aufweist, wobei der Querschnitt der Dampfleitung so groß ist, daß beim Betrieb der Vorrichtung mehr Dampf als Flüssigkeit, vorzugsweise im wesentlichen nur Dampf, durch die Dampfleitung abgeführt wird.

## Beschreibung

Die Erfindung betrifft eine Vorrichtung zum Druckaufbau in einem Speicherbehälter für kryogene Flüssigkeiten mit einem Gehäuse, welches zumindest eine Eintrittsöffnung für Flüssigkeit und im Inneren eine Heizvorrichtung zur Verdampfung von Flüssigkeit sowie eine im oberen Drittel des Gehäuses angeordnete Dampfleitung zum Abführen der bei der Verdampfung entstehenden Dampfblasen aufweist.

Angesichts der verkehrsbedingten Immissionsbelastungen wird in Zukunft in zunehmendem Maße Wasserstoff als Kraftstoff für Kraftfahrzeuge, Flugzeuge und Schiffe eingesetzt werden. Die Speicherung des Wasserstoffs an Bord dieser Fahrzeuge erfolgt zweckmäßigerweise in flüssiger Form, da aufgrund der geringen Dichte von gasförmigem Wasserstoff die Speicherkapazität ansonsten nur sehr begrenzt wäre. Der Wasserstoff wird daher auf etwa 25 K abgekühlt und in den auf dem Fahrzeug befindlichen Speichertank bei einem Druck von 3 bis 4 bar eingeleitet.

Wird als Antriebsaggregat ein Verbrennungsmotor eingesetzt, so ist der Fülldruck von 3 bis 4 bar für einen ordnungsgemäßen Betrieb des Motors gerade ausreichend. Beim Einsatz von Brennstoffzellen als Fahrzeugantrieb ist dagegen derzeit eine Wasserstoffzufuhr unter einem Druck von 10 bar erforderlich. Eine Speicherung des Wasserstoffs bei einem Druck von 10 bar und einer entsprechenden Gleichgewichtstemperatur von etwa 31 K ist allerdings nachteilig, da die Speicherkapazität aufgrund der sich mit steigender Temperatur verringernden Dichte des flüssigen Wasserstoffs deutlich sinkt.

In der Praxis wird daher der bei einem Druck von 3 bis 4 bar gespeicherte Wasserstoff zunächst auf 10 bar verdichtet, bevor er der Brennstoffzelle zugeführt werden kann. Die Druckerhöhung kann beispielsweise durch Einleiten zusätzlichen gasförmigen Wasserstoffs in den Speichertank oder durch Verdampfen eines Teils des flüssigen Wasserstoffs erreicht werden. Eine derartige Vorrichtung zum Druckaufbau ist beispielsweise aus der DE 42 12 626 A1 bekannt. Hierbei ist am Boden des Speichertanks eine Mammutpumpe befestigt, in der mittels der Pumpenheizung in die Mammutpumpe eintretender flüssiger Wasserstoff teilweise verdampft wird. Die dabei entstehenden Gasblasen reißen flüssigen Wasserstoff über eine Steigleitung nach oben in den Gasraum des Speichertanks mit, wo dieser schließlich mittels einer Verdampfer-Heizung verdampft wird.

Aufgabe vorliegender Erfindung ist es, eine Vorrichtung der eingangs genannten Art aufzuzeigen, die eine einfache, schnelle und sichere Möglichkeit des Druckaufbaus in einem Speicherbehälter für kryogene Flüssigkeiten bietet.

Diese Aufgabe wird erfindungsgemäß dadurch gelöst, daß der Querschnitt der Dampfleitung so groß ist, daß beim Betrieb der Vorrichtung mehr Dampf als Flüssigkeit, vorzugsweise im wesentlichen nur Dampf, durch die Dampfleitung abgeführt wird.

Mittels der erfindungsgemäßen Vorrichtung wird lediglich ein kleiner Teil der in dem Speicherbehälter befindlichen kryogenen Flüssigkeit zur Druckerhöhung in dem Behälter verdampft. Hierzu ist in dem Behälter ein Gehäuse vorgesehen, welches zumindest eine Eintrittsöffnung für Flüssigkeit besitzt. Im Inneren des Gehäuses befindet sich eine eine Heizvorrichtung, mit deren Hilfe ein Teil der Flüssigkeit verdampft werden kann. Der dabei entstehende Dampf wird über eine Dampfleitung in den Kopfraum des Speicherbehälters abgeführt. Der Querschnitt der Dampfleitung wird dabei so gewählt, daß der Strömungswiderstand der Gasblasen so gering ist, daß diese keine oder nur wenig Flüssigkeit mitreißen. Im Gegensatz zu einer Mammutpumpe oder Blasensäule ist daher im Kopfraum des Speicherbehälters keine zweite Heizung zur Verdampfung der nach oben beförderten Flüssigkeit notwendig.

Von Vorteil ist die Querschnittsfläche der Dampfleitung größer als die Summe der Querschnittsflächen der beim Betrieb der Vorrichtung gleichzeitig durch diese Querschnittsfläche der Dampfleitung durchtretenden Dampfblasen. Der Querschnitt der Dampfleitung ist dementsprechend anhand der Leistung der Heizvorrichtung auszulegen.

Vorzugsweise ist die Dampfleitung am höchsten Punkt des Gehäuses angeordnet ist. Auf diese Weise steht am Eingang der Dampfleitung im wesentlichen nur Dampf an, so daß eine Beförderung von Flüssigkeit durch die Dampfleitung nahezu vollständig ausgeschlossen ist.

Durch die Erfindung soll lediglich ein Teil der Flüssigkeit zur Druckerhöhung im Speicherbehälter verdampft werden, wobei die Temperatur der restlichen im Speicherbehälter gespeicherten Flüssigkeit möglichst nicht geändert werden soll. Mit der Verdampfung eines Teils der in dem Gehäuse befindlichen Flüssigkeit geht unweigerlich eine Erwärmung der übrigen Flüssigkeit in dem Gehäuse einher. Um eine Erwärmung der außerhalb des Gehäuses befindlichen Flüssigkeit zu vermeiden, werden von Vorteil das Gehäuse und/oder die Dampfleitung thermisch isoliert.

Die Isolierung des Gehäuses und/oder der Dampfleitung erfolgt vorzugsweise dadurch, daß diese doppelwandig ausgebildet werden und der Spalt zwischen den beiden Wänden eine Eintrittsöffnung für Dampf und/oder Flüssigkeit besitzt.

Es hat sich als günstig erwiesen, an dem nicht mit dem Gehäuse verbundenen Ende der Dampfleitung eine Vorrichtung zum Zurückhalten von Flüssigkeit vorzusehen. Diese Rückhaltevorrichtung fängt Flüssigkeit auf, die trotz der erfindungsgemäßen Dimensionierung der Dampfleitung mit dem Dampf mitbefördert wird. Auf diese Weise wird eine Vermischung von erwärmter Flüssigkeit, welche ungewollt durch die Dampfleitung in den Kopfraum des Speicherbehälters transportiert wurde, mit der übrigen Flüssigkeit vermieden.

In umfangreichen Versuchen hat sich gezeigt, daß bei einer Verwendung der erfindungsgemäßen Vorrichtung zum Druckaufbau in einem Speicherbehälter für flüssigen Wasserstoff die minimale Ausdehnung der Dampfleitung im Querschnitt mehr als 5 mm, bevorzugt mehr als 10 mm, besonders bevorzugt mehr als 20 mm betragen sollte. Unter diesen Bedingungen ist sichergestellt, daß im wesentlichen nur gasförmiger Wasserstoff durch die Dampfleitung befördert wird.

Die Erfindung bezieht sich neben der Vorrichtung zum Druckaufbau in einem Speicherbehälter auch auf einen Speicherbehälter für kryogene Flüssigkeiten. Dieser besitzt in seinem Inneren, vorzugsweise in der Nähe seines Bodens, ein Gehäuse, welches zumindest eine Eintrittsöffnung für Flüssigkeit und im Inneren eine Heizvorrichtung zur Verdampfung von Flüssigkeit aufweist. Zwischen dem Gehäuse und einer Stelle oberhalb der maximalen Füllhöhe des Speicherbehälters verläuft eine Dampfleitung zum Abführen der bei der Verdampfung entstehenden Dampfblasen. Erfindungsgemäß ist der Querschnitt der Dampfleitung so groß, daß mehr Dampf als Flüssigkeit durch die Dampfleitung abgeführt wird.

Nach der Druckerhöhung befinden sich allerdings der flüssige und der gasförmige Wasserstoff im Speichertank im thermischen Ungleichgewicht, da die Flüssigkeit eine Temperatur von etwa 25 K aufweist, während in der Gasatmosphäre eine Temperatur von 31 K vorliegt. Das in dem Tank vorliegende thermodynamische System ist daher bestrebt, durch Rückkondensation von Wasserstoffgas eine Angleichung der thermischen Verhältnisse von Gas und Flüssigkeit herbeizuführen.

Ein derartiger Speicherbehälter wird daher vorteilhaft dadurch verbessert, daß der Speicherbehälter durch eine Vielzahl von Trennwänden, die aus einem schlecht wärmeleitenden Material bestehen, in Zellen unterteilt ist, deren maximale Ausdehnung in einer Ebene senkrecht zu den Trennwänden kleiner als 50 mm, bevorzugt kleiner als 10 mm, besonders bevorzugt kleiner als 5 mm ist. Aufgrund des Einsatzes von Trennwänden in dem Speicherbehälter und der erfindungsgemäßen Dimensionierung der daraus resultierenden Zellen wird daher sichergestellt, daß eine in der in dem Speicherbehälter gespeicherten Flüssigkeit bereits vorliegende oder gezielt herbeigeführte Temperaturschichtung bestehen bleibt.

Die Erfindung hat sich insbesondere bei der Speicherung von flüssigem Wasserstoff in einem Kraftfahrzeug bewährt.

Die Erfindung sowie weitere Einzelheiten der Erfindung werden im folgenden anhand von in den Zeichnungen dargestellten Ausführungsbeispielen näher erläutert. Hierbei zeigt die einzige
- Figur: einen erfindungsgemäßen Speichertank.

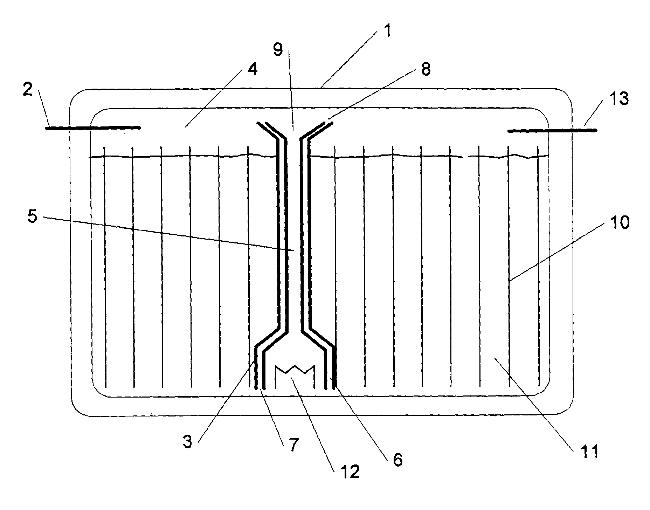

In der Figur ist ein Speicherbehälter 1 für ein wasserstoffgetriebenes Fahrzeug mit Brennstoffzellentechnologie dargestellt, welches im Fahrbetrieb Wasserstoff unter einem Druck von 10 bar benötigt. Um eine möglichst große Menge an Wasserstoff in dem Speicherbehälter 1 speichern zu können, wird der Wasserstoff zunächst bei niedrigem Druck, beispielsweise 1 bis 4 bar, in den Speicherbehälter 1 über die Einspeiseleitung 2 eingebracht. Im Fahrbetrieb wird dann der Druck in dem Behälter 1 durch Verdampfen von Flüssigkeit erhöht.

Hierzu befindet sich am Boden des Speicherbehälters 1 ein Gehäuse 3, mit dem eine vom höchsten Punkt des Gehäuses 3 bis in den Kopfraum 4 des Speicherbehälters 1 ragende Dampfleitung 5 verbunden ist. Die Dampfleitung 5 besitzt einen Durchmesser von 20 mm. Das Gehäuse 3 und die Dampfleitung 5 sind doppelwandig ausgeführt, wobei der zwischen den Wänden bestehende Spalt 6 eine Ein- und Austrittsöffnungen 7, 8 für Flüssigkeit bzw. Gas besitzt. Der durch diese Eintrittsöffnungen 7, 8 in den Spalt 6 eindringende flüssige oder gasförmige Wasserstoff dient zur Isolierung zwischen dem in dem Dampfrohr 5 aufsteigenden gasförmigem Wasserstoff und dem das Gehäuse umgebenden flüssigen Wasserstoff.

Der Speicherbehälter 1 ist durch eine Vielzahl von senkrecht angeordneten Trennwänden 10 unterteilt, welche so geformt und miteinander verklebt sind, daß sich im Querschnitt eine wabenförmige Struktur ergibt. Die maximale Ausdehnung 11 einer dieser wabenförmigen Zellen in einer Ebene senkrecht zu den Trennwänden 10 beträgt 6 mm. Die Trennwände selbst bestehen aus einem in Harz getränkten Gestrick, welches flüssigkeitsundurchlässig und schlecht wärmeleitend ist.

Zur Druckerhöhung in dem Speicherbehälter 1 wird ein Teil des flüssigen Wasserstoffs mit der Heizung 12 verdampft. Die entstehenden Dampfblasen steigen durch die Dampfleitung 5 in den Kopfraum 4 auf. Aufgrund des relativ großen Durchmessers der Dampfleitung 5 von 20 mm wird im wesentlichen nur Dampf nach oben geleitet, so daß sich im gesamten Kopfraum 4 über dem flüssigen Wasserstoff ein erhöhter Druck einstellt. Sollte dennoch Flüssigkeit mit nach oben gefördert werden, so sammelt sich diese in der trichterförmigen Erweiterung 9 der Dampfleitung 5.

Nach anfänglicher Rückkondensation von gasförmigem Wasserstoff aus dem Kopfraum 4 bilden die obersten Flüssigkeitsschichten eine isolierende Schicht, die eine weitere Rückkondensation verhindern. Auf diese Weise ist es möglich, im Kopfraum 4 einen Druck von 10 bar, der einer Siedetemperatur von etwa 31 K entspricht, aufrechtzuerhalten, während der flüssige Wasserstoff auf etwa 25 K unterkühlt ist. Die zusätzliche Unterteilung des Speicherbehälters 1 in einzelne Zellen verhindert dabei Flüssigkeitsbewegungen in dem Speicherbehälter 1, die zu einer Zerstörung des Temperaturgradienten in dem flüssigen Wasserstoff führen könnten. Der gasförmige Wasserstoff wird über Leitung 13 den Brennstoffzellen zugeführt.

Die Erfindung ermöglicht es somit, Wasserstoff, der in flüssiger Form bei geringer Temperatur gespeichert wird, gasförmig unter hohem Druck von beispielsweise 10 bar zur Verfügung zu stellen.

## Patentansprüche

1. Vorrichtung zum Druckaufbau in einem Speicherbehälter für kryogene Flüssigkeiten mit einem Gehäuse, welches zumindest eine Eintrittsöffnung für Flüssigkeit und im Inneren eine Heizvorrichtung zur Verdampfung von Flüssigkeit sowie eine im oberen Drittel des Gehäuses angeordnete Dampfleitung zum Abführen der bei der Verdampfung entstehenden Dampfblasen aufweist, **dadurch gekennzeichnet**, daß der Querschnitt der Dampfleitung so groß ist, daß beim Betrieb der Vorrichtung mehr Dampf als Flüssigkeit, vorzugsweise im wesentlichen nur Dampf, durch die Dampfleitung abgeführt wird.

2. Vorrichtung nach Anspruch 1, dadurch gekennzeichnet, daß die Querschnittsfläche der Dampfleitung größer als die Summe der Querschnittsflächen der beim Betrieb der Vorrichtung gleichzeitig durch diese Querschnittsfläche der Dampfleitung durchtretenden Dampfblasen ist.

3. Vorrichtung nach einem der Ansprüche 1 oder 2, dadurch gekennzeichnet, daß die Dampfleitung am höchsten Punkt des Gehäuses angeordnet ist.

4. Vorrichtung nach einem der Ansprüche 1 bis 3, dadurch gekennzeichnet, daß das Gehäuse und/oder die Dampfleitung thermisch isoliert sind.

5. Vorrichtung nach einem der Ansprüche 1 bis 4, dadurch gekennzeichnet, daß das Gehäuse und/oder die Dampfleitung doppelwandig ausgebildet sind und der Spalt zwischen den beiden Wänden eine Eintrittsöffnung für Dampf und/oder Flüssigkeit besitzt.

6. Vorrichtung nach einem der Ansprüche 1 bis 5, dadurch gekennzeichnet, daß an dem nicht mit dem Gehäuse verbundenen Ende der Dampfleitung eine Vorrichtung zum Zurückhalten von Flüssigkeit vorgesehen ist.

7. Vorrichtung nach einem der Ansprüche 1 bis 6 zum Druckaufbau in einem Speicherbehälter für flüssigen Wasserstoff, dadurch gekennzeichnet, daß im Querschnitt die minimale Ausdehnung der Dampfleitung mehr als 5 mm, bevorzugt mehr als 10 mm, besonders bevorzugt mehr als 20 mm beträgt.

8. Speicherbehälter für kryogene Flüssigkeiten mit einem in seinem Inneren, vorzugsweise in der Nähe seines Bodens, angeordneten Gehäuse, welches zumindest eine Eintrittsöffnung für Flüssigkeit und im Inneren eine Heizvorrichtung zur Verdampfung von Flüssigkeit aufweist, sowie mit einer zwischen dem Gehäuse und einer Stelle oberhalb der maximalen Füllhöhe des Speicherbehälters verlaufenden Dampfleitung zum Abführen der bei der Verdampfung entstehenden Dampfblasen, **dadurch gekennzeichnet**, daß der Querschnitt der Dampfleitung so groß ist, daß mehr Dampf als Flüssigkeit durch die Dampfleitung abgeführt wird.

9. Speicherbehälter nach Anspruch 8, dadurch gekennzeichnet, daß der Speicherbehälter durch eine Vielzahl von Trennwänden, die aus einem schlecht wärmeleitenden Material bestehen, in Zellen unterteilt ist, deren maximale Ausdehnung in einer Ebene senkrecht zu den Trennwänden kleiner als 50 mm, bevorzugt kleiner als 10 mm, besonders bevorzugt kleiner als 5 mm ist.

10. Verwendung eines Speicherbehälters nach einem der Ansprüche 8 oder 9 zur Speicherung von flüssigem Wasserstoff in einem Kraftfahrzeug.
